(19) Europäisches Patentamt
European Patent Office
Office européen des brevets

(11) EP 2 046 864 B1

(12) **EUROPEAN PATENT SPECIFICATION**

(45) Date of publication and mention of the grant of the patent:
**18.11.2009 Bulletin 2009/47**

(21) Application number: **07799848.2**

(22) Date of filing: **26.07.2007**

(51) Int Cl.:
***C08G 73/00*** *(2006.01)* ***C08G 73/18*** *(2006.01)*
***C08G 73/22*** *(2006.01)* ***D01D 5/12*** *(2006.01)*
***D01D 5/26*** *(2006.01)*

(86) International application number:
**PCT/US2007/074465**

(87) International publication number:
**WO 2008/016825 (07.02.2008 Gazette 2008/06)**

(54) **POLYARENAZOLE MICROFILAMENTS AND PROCESS FOR MAKING SAME**

POLYARENAZOL-MIKROFILAMENTE UND VERFAHREN ZU IHRER HERSTELLUNG

MICROFILAMENTS DE POLYARÉNAZOLE ET LEUR PROCÉDÉ DE FABRICATION

(84) Designated Contracting States:
**DE FR GB IT NL**

(30) Priority: **31.07.2006 US 834426 P**

(43) Date of publication of application:
**15.04.2009 Bulletin 2009/16**

(73) Proprietor: **E.I. DU PONT DE NEMOURS AND COMPANY**
**Wilmington, DE 19898 (US)**

(72) Inventors:
- **BATES, William, D.**
  **Chester, Virginia 23831 (US)**
- **HOVANEC, Joseph, B.**
  **Richmond, Virginia 23223 (US)**
- **GABARA, Vlodek**
  **Richmond, Virginia 23238 (US)**

(74) Representative: **Dannenberger, Oliver Andre et al**
**Abitz & Partner**
**Patentanwälte**
**Postfach 86 01 09**
**81628 München (DE)**

(56) References cited:
**WO-A-03/080905** **WO-A-2006/105230**
**US-A- 4 263 245** **US-A- 5 273 703**
**US-A- 5 674 969** **US-A- 5 976 447**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 046 864 B1

## Description

### FIELD OF THE INVENTION

The present invention concerns polyarenazole microfilaments and processes for making such filaments.

### BACKGROUND OF THE INVENTION

Certain low denier fibers have been shown to be useful in a variety of end uses such as filtration media, cell & tissue cultures, drug delivery systems, and specialty textiles.

U.S. Patent No. No. 4,263,245 describes certain low denier, high-strength polybibenzimidazole filaments that are 20 to 200 microns in diameter.

Filtration mediums, fine particle wipe mediums and absorbent mediums containing a mixture of submicron and greater than submicron fibers are disclosed in U.S. Patent No. 6,315,806. Preferred fibers are said to be made from polypropylene polymer. Published U.S. Application No. 20050026526 discloses filter media having a mixture of course fibers and fine fibers of diameter less than 1 $\mu$m.

PCT Patent Application No. WO 03/080905 discloses the preparation of a nanofiber web by an electro-blown spinning process. PCT Patent Application No. WO 05/026398 describes production of nanofibers by reactive electrospinning.

A method for producing a webbed fibrillar material is disclosed in published U.S. Application No. 20050048274. The process injects polymer through an electric field towards an electrically charged target.

There is an ongoing need for web containing nanofibers that have improved properties.

### SUMMARY OF THE INVENTION

Provided is a polymer filament having an average diameter of 20 to 800 nm, the filament comprising a polypyridazole, polybenzoxazole (PBO), or polybenzothiazole (PBZ) polymer having an inherent viscosity of greater than 20g/dl. In some embodiments, the average diameter is in the range of the average diameter is in the range of 100 to 500 nm.

In some embodiments, the polypyridazole, polybenzoxazole (PBO), or polybenzothiazole (PBZ) polymer has an inherent viscosity of greater than 25g/dl. In other embodiments, the inherent viscosity is greater than 28 g/dl. Useful polyarenazole polymers include polypyridoazole polymers. One useful polypyridoazole polymer is poly[2,6-diimidazo [4,5-b:4,5-e]- pyridinylene-1,4-(2,5-dihydroxy)phenylene).

Also provided are yarns comprising filaments described herein. In some embodiments, the yarn has a filament tenacity of greater than 10 g / denier.

The invention also concerns fabrics and garments comprising the filaments and/or yarns described herein.

The invention also provides a polypyridazole, polybenzoxazole (PBO), or polybenzothiazole (PBZ) polymer filament comprising:

- extruding a solution comprising polypyridazole, polybenzoxazole (PBO), or polybenzothiazole (PBZ) polymer through a spinneret having a first applied voltage; and
- collecting the extruded polypyridazole, polybenzoxazole (PBO), or polybenzothiazole (PBZ) polymer on a collection surface optionally having a second applied voltage that is opposite in polarity to the first applied voltage.

In some embodiments, the solution comprising polypyridazole, polybenzoxazole (PBO), or polybenzothiazole (PBZ) polymer comprises polyphosphoric acid as a solvent.

In some methods, the first applied voltage is in the range of 1kV to 300kV. In certain methods, the second applied voltage is opposite in polarity to the first applied voltage and in the range of 0 to 10kV.

In some embodiments, the method additionally comprises the step of passing the extruded polyarenazole polymer solution through an air gap. The extruded polymer can be accelerated in the air gap by providing air flow along the direction between the spinneret and collection surface In certain embodiments, the second applied voltage is zero.

### DETAILED DESCRIPTION OF ILLUSTRATIVE EMBODIMENTS

Provided is a polymer filament having an average diameter of 20 to 800 nm, the filament comprising a polypyridazole, polybenzoxazole (PBO), or polybenzothiazole (PBZ) polymer having an inherent viscosity of greater than 20g/dl. Also provided are yarns comprising such filaments. Additional aspects concern fabrics and garments comprising such filaments and/or yarns.

The filaments and yarns of the instant invention utilize polyarenazole microfibers. Polyareneazole polymer may

be made by reacting a mix of dry ingredients with a polyphosphoric acid (PPA) solution. The dry ingredients may comprise azole-forming monomers and metal powders. Accurately weighed batches of these dry ingredients can be obtained through employment of at least some of the preferred embodiments of the present invention.

Exemplary azole-forming monomers include 2,5-dimercapto-p-phenylene diamine, terephthalic acid, bis-(4-benzoic acid), oxy-bis-(4-benzoic acid), 2,5-dihydroxyterephthalic acid, isophthalic acid, 2,5-pyridodicarboxylic acid, 2,6-napthalenedicarboxylic acid, 2,6-quinolinedicarboxylic acid, 2,6-bis(4-carboxyphenyl) pyridobisimidazole, 2,3,5,6-tetraaminopyridine, 4,6-diaminoresorcinol, 2,5-diaminohydroquinone, 1,4-diamino-2,5-dithiobenzene, or any combination thereof. Preferably, the azole forming monomers include 2,3,5,6-tetraaminopyridine and 2,5-dihydroxyterephthalic acid. In certain embodiments, it is preferred that that the azole-forming monomers are phosphorylated. Preferably, phosphorylated azole-forming monomers are polymerized in the presence of polyphosphoric acid and a metal catalyst.

Metal powders can be employed to help build the molecular weight of the final polymer. The metal powders typically include iron powder, tin powder, vanadium powder, chromium powder, and any combination thereof.

The azole-forming monomers and metal powders are mixed and then the mixture is reacted with polyphosphoric acid to form a polyareneazole polymer solution. Additional polyphosphoric acid can be added to the polymer solution if desired.

Polybenzoxazole (PBO) and polybenzothiazole (PBZ) two suitable polymers. These polymers are described in PCT Application No. WO 93/20400. Polybenzoxazole and polybenzothiazole are preferably made up of repetitive units of the following structures:

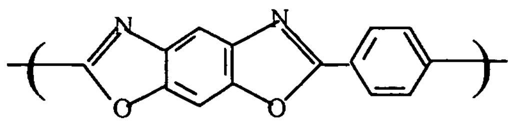

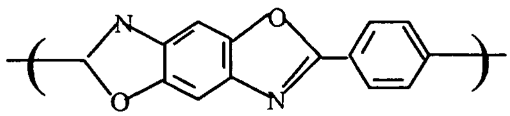

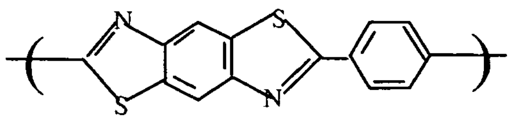

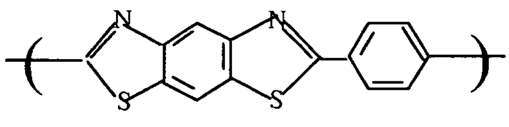

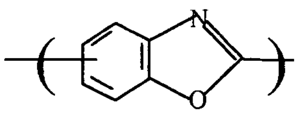

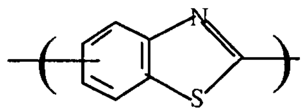

Polybibenzimidazole polymer is useful for making fiber used in this invention. Such products can be made by the processes disclosed in U.S. Patent 2,895,948 and U.S. Reissue 26,065. Polybibenzimidazole fibers can be made by known processes such as those disclosed in U.S. Patent 3,441,640 and U.S. Patent 4,263,245.

In some embodiments, the polybenzimidazole (PBI) fiber comprises polybibenzimidazole polymer. One useful polybibenzimidazole polymer is poly(2,2'-(m-phenylene)-5,5'-bibenzimidazole) polymer. One commercial PBI polymer is prepared from tetra-aminobiphenyl and diphenyl isophthalate.

While the aromatic groups shown joined to the nitrogen atoms may be heterocyclic, they are preferably carbocyclic; and while they may be fused or unfused polycyclic systems, they are preferably single six-membered rings. While the group shown in the main chain of the bis-azoles is the preferred para-phenylene group, that group may be replaced by any divalent organic group which doesn't interfere with preparation of the polymer, or no group at all. For example, that group may be aliphatic up to twelve carbon atoms, tolylene, biphenylene, bis-phenylene ether, and the like.

The polybenzoxazole and polybenzothiazole used to make fibers of this invention should have at least 25 and preferably at least 100 repetitive units. Preparation of the polymers and spinning of those polymers is disclosed in the aforementioned PCT application WO 93/20400.

Polypyridobisimidazole fibers are particularly suited for use in the instant invention. These fibers are made from rigid rod polymers that are of high strength. The polypyridobisimidazole fiber has an inherent viscosity of at least 20 dl/g or at least 25 dl/g or at least 28 dl/g. Such fibers include PIPD fiber (also known as M5® fiber and fiber made from poly [2,6-diimidazo[4,5-b:4,5-e]-pyridinylene-1,4(2,5-dihydroxy)phenylene). PIPD fiber is based on the structure:

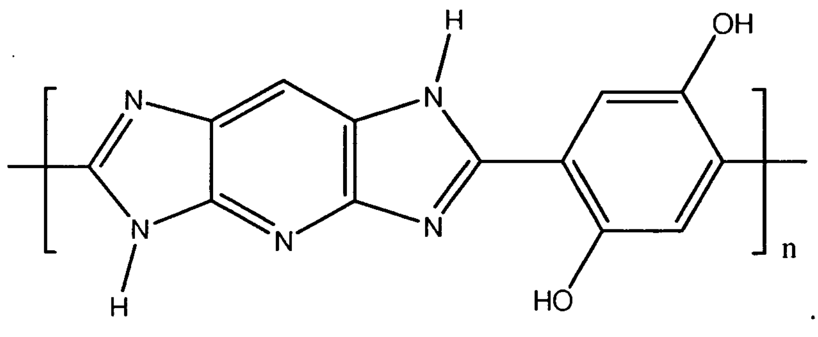

Polypyridobisimidazole fiber can be distinguished from the well known commercially available PBI fiber or polybenzimidazole fiber in that that polybenzimidazole fiber is a polybibenzimidazole. Polybibenzimidazole fiber is not a rigid rod polymer and has low fiber strength and low tensile modulus when compared to polypyridobisimidazoles.

PIPD fibers have been reported to have the potential to have an average modulus of about 310 GPa (2100 grams/denier) and an average tenacities of up to about 5.8 Gpa (39.6 grams/denier). These fibers have been described by Brew, et al., Composites Science and Technology 1999, 59, 1109; Van der Jagt and Beukers, Polymer 1999, 40, 1035; Sikkema, Polymer 1998, 39,5981; Klop and Lammers, Polymer, 1998, 39, 5987; Hageman, et al., Polymer 1999, 40, 1313.

One method of making rigid rod polypyridoimidazole polymer is disclosed in detail in United States Patent 5,674,969 to Sikkema et al. Polypyridoimidazole polymer may be made by reacting a mix of dry ingredients with a

polyphosphoric acid (PPA) solution. The dry ingredients may comprise pyridobisimidazole-forming monomers and metal powders. The polypyridobisimidazole polymer used to make the rigid rod fibers used in the fabrics of this invention should have at least 25 and preferably at least 100 repetitive units.

For the purposes of this invention, the relative molecular weights of the polypyridoimidazole polymers are suitably characterized by diluting the polymer products with a suitable solvent, such as methane sulfonic acid, to a polymer concentration of 0.05 g/dl, and measuring one or more dilute solution viscosity values at 30°C. Molecular weight development of polypyridoimidazole polymers of the present invention is suitably monitored by, and correlated to, one or more dilute solution viscosity measurements. Accordingly, dilute solution measurements of the relative viscosity ("$V_{rel}$" or "$\eta_{rel}$" or "$n_{rel}$") and inherent viscosity ("$V_{inh}$" or "$\eta_{inh}$" or "$n_{inh}$") are typically used for monitoring polymer molecular weight. The relative and inherent viscosities of dilute polymer solutions are related according to the expression

$$V_{inh} = ln\ (V_{rel})\ /\ C,$$

where *ln* is the natural logarithm function and C is the concentration of the polymer solution. $V_{rel}$ is a unitless ratio of the polymer solution viscosity to that of the solvent free of polymer, thus $V_{inh}$ is expressed in units of inverse concentration, typically as deciliters per gram ("dl/g"). Accordingly, in certain aspects of the present invention the polypyridoimidazole polymers are produced that are characterized as providing a polymer solution having an inherent viscosity of at least about 20 dl/g at 30°C at a polymer concentration of 0.05 g/dl in methane sulfonic acid. Because the higher molecular weight polymers that result from the invention disclosed herein give rise to viscous polymer solutions, a concentration of about 0.05 g/dl polymer in methane sulfonic acid is useful for measuring inherent viscosities in a reasonable amount of time.

It is well known in the art that ultra-fine fibers can be prepared by flash spinning, electrostatic spinning, and melt-blown spinning. Ultra-fine fibers, such as microfibers, and nonwoven webs can be produced by a process that utilizes an electro-blown spinning process. In such a process, a polymer solution is discharged through a spinning nozzle to which a high voltage has been applied. The fiber spun from the nozzle is collected on a grounded suction collector. Typically, compressed air is injected at the lower end of the spinning nozzle. Such a processes for making microfibers and webs containing such fibers can be found in PCT Patent Application WO03/080905.

As used herein the term "fiber" is defined as a relatively flexible, macroscopically homogeneous body having a high ratio of length to width across its cross-sectional area perpendicular to its length. The fiber cross section can be any shape, but is typically round. Herein, the term "filament" or "continuous filament" is used interchangeably with the term "fiber."

As used herein, "basis weight" cam be determined by ASTM D-3776 and reported in $g/m^2$.

As used herein, "fiber diameter" can be determined as follows. Ten scanning electron microscope (SEM) images at 5,000x magnification were taken of each microfiber layer sample. The diameter of eleven (11) clearly distinguishable microfibers were measured from each SEM image and recorded. Defects were not included (i.e., lumps of microfibers, polymer drops, intersections of microfibers). The average fiber diameter for each sample was calculated.

The terms "tenacity" and "tensile strength" refer to the strength of a fiber, yarn or fabric (ISO 5081) as measured using ASTM D638. Tensile properties of the nonwoven web are being determined by (ISO 1924) "Paper and Board - Determination of Tensile Properties".

**Examples**

The invention is illustrated by, but is not intended to be limited by the following examples.

**Example 1**

**Polymer Process**

11,580 grams of polyphosphoric acid (PPA) (84.7% $P_2O_5$) at 120°C is fed from a weigh tank into a 10CV DIT Helicone mixer that has a nitrogen atmosphere of 1 atmosphere. (The mixer blades are stopped so as not to obscure the addition port.) After the PPA is in the mixer, the mixer blades are run at 40 rpm and the jacket cooling water is started to cool the PPA to 70 °C. When the PPA is cooled, the water flow is stopped and the mixer blades are stopped so as not to obscure the addition port.

3400 grams of $P_2O_5$ are weighed into a transfer bin in a weigh chamber under dry nitrogen ($N_2$). The 1 atmosphere (absolute) nitrogen pressure in the mixer is equalized to the 1 atmosphere pressure in the $N_2$-blanketed weigh chamber. The $P_2O_5$ is transferred to the 10CV mixer, and then the transfer valve is closed. The mixer blades are started

and their speed is ramped to 40 rpm. Water cooling is restarted and a vacuum is slowly applied to degas the mixture as the $P_2O_5$ is blended into the PPA. Water cooling is controlled to maintain the contents of the mixer at 75 (+/- 5) °C. The pressure in the mixer is reduced to 50 mm Hg and mixing is continued for an additional 10 minutes. The water flow is then stopped and the mixer blades are stopped so as not to obscure the addition port. $N_2$ is admitted to bring the pressure up to 1 atmosphere (absolute).

10174 grams of monomer-complex are weighed into a transfer bin in a dry $N_2$ weigh chamber. In addition, 51 grams of tin powder (approx. 325 mesh) and 25 grams of benzoic acid are weighed into a separate $N_2$-blanketed transfer vessel in the same weigh chamber.

The 1 atmosphere (absolute) pressure in the mixer is equalized to the 1 atmosphere pressure in the $N_2$-blanketed weigh chamber. The monomer complex, tin, and benzoic acid are transferred to the 10CV mixer, and then the transfer valve is closed. The mixer blades are started and their speed is ramped to 40 rpm. Water cooling is restarted when the agitator starts, and the monomer complex, tin, and benzoic acid are blended into the PPA mixture for 10 minutes after the mixer blades have reached the 40 rpm rate. Then a vacuum is slowly applied to degas the mixture as the blending continues. Water cooling is controlled to maintain the contents of the mixer at 75 (+/-5) °C. The pressure in the mixer is reduced to 50 mm Hg pressure and mixing is continued for 10 minutes. Then the mixer blade speed is reduced to 12 rpm and water cooling is reduced to allow the temperature of the contents in the mixer to rise to 85 (+/-5) °C. The mixer hladcs are then stopped, $N_2$ is admitted to bring the pressure up to 1 atmosphere, and the contents of the mixer are then transferred to a feed tank having two agitators (a DIT 10SC mixer).

The reactant mixture in the feed tank is maintained at a temperature of 110 °C and a pressure of 50 mm Hg absolute. Both agitators are run at 40 rpm. The reactant mixture is pumped from the tank at an average rate of 10,050 grams/hour through a heat exchanger, to increase the temperature of the mixture to 137 °C, and into a series of three static mixer reactors, allowing a 3-hour hold-up time for oligomer formation. Exiting the static mixer reactors, superphosphoric acid (SPA) (76 % $P_2O_5$) is injected into the oligomer mixture at an average rate of 1079 grams/hour.

The oligomer mixture with SPA is then well blended through a static mixer and transferred to a stirred surge tank any volatiles are removed by a vacuum. The stirred surge tank is a DIT 5SC mixer, having a temperature maintained at 137 °C. Average hold-up time in the surge tank is 1¼ hr.

Polymerization of the Mixture

The oligomer mixture is then further polymerized to the desired molecular weight at a temperature of 180 °C. The oligomer mixture is first pumped through a heat exchanger to raise the temperature of the mixture to 180 C and then through a reactor system of static mixers and a rotating Couette-type-shearing reactor imparting 5 $sec^{-1}$ shear rate to the polymerizing solution. The reactor system is maintained at 180 °C (+/- 5 degrees) and the hold-up time in the reactor system is 4 hours. A solution containing a polymer having an inherent viscosity of 25 dl/g is obtained.

## Spinning Process

Fiber Formation & Quenching

Electro-Blowing:

A 20 weight percent solution of 25 IV polymer in PPA (having a strength of equivalent of 81.5 percent P2O5 is forwarded to a spinnerette pack having electrically charged spinning nozzles. The spinning nozzles have a diameter of about 0.25mm, an L/d ratio of about 10, DCD of 300mm, a spinning pressure of about 6 $kg/cm^2$, and an applied voltage of about 50kV. The number of spinning nozzles in the spinnerette pack is 51.

Surrounding the spinning nozzles are air nozzles that provide high pressure air for the electro-blowing process. The air velocity is about 3000meters/minute and the air temperature is about 100 degrees Celsius.

The spun filaments are collected on a moving belt by suction to form a web. The distance between the spinnerette nozzle and suction collection belt is 30cm.

Hydrolysis, Washing, & Drying

The web is sprayed with water at 40 degrees Celsius for 20 seconds. The web is then passed through an oven operating at a temperature of 300 °C for a residence time of 60 seconds. The web is then washed with a water spray. The water temperature is 40 °C. The web is then dried by passing the web through an oven operating at 150 °C for a residence time of 40 seconds.

## Example 2

The process of example 1 is repeated except that the air velocity is 0 meters / minute.

## Example 3

The process of example 1 is repeated except that no voltage is applied to the spin nozzle.

## Example 4

This example illustrates the optional heat treatment of the web made in the previous examples. The process of a preceding example is repeated, except after drying, a volatile antistatic finish is applied to theweb instead of a textile finish, and the web is immediately conveyed to an oven instead of being wound on a bobbin.

Heat Treatment

The dried web is conveyed to an electrically heated belt, which raises the temperature of the web to 400 °C. The web is then conveyed into a $N_2$-blanketed tube oven which raises the temperature of the yarn to 500 °C. Before exiting the $N_2$ atmosphere, the web is cooled in a room temperature $N_2$ atmosphere for 2 seconds, and a finish is applied. The web is then collected.

## Claims

**1.** A polymer filament having an average diameter of 20 to 800 nm, preferably in the range of 100 to 500 nm, the filament comprising polypyridazole, polybenzoxazole (PBO), or polybenzothiazole (PBZ) polymer having an inherent viscosity of greater than 20g/dl, preferably
of greater than 25g/dl.

**2.** The polymer filament of claim 1 wherein the polypyridoazole polymer is poly[2,6-diimidazo[4,5-b:4,5-e]-pyridinylene-1,4-(2,5-dihydroxy)phenylene).

**3.** A yarn comprising a filament of claim 1 having a filament tenacity of greater than 10 g/denier.

**4.** The yarn of claim 3 wherein the filament comprises poly[2,6-diimidazo[4,5-b:4,5-e]-pyridinylene-1,4-(2,5-dihydroxy) phenylene).

**5.** A fabric comprising filament of claim 1 or 2.

**6.** A garment comprising fabric of claim 5.

**7.** A method of producing a polypyridazole, polybenzoxazole (PBO), or polybenzothiazole (PBZ) polymer filament comprising:

extruding a solution comprising polypyridazole, PBO, or PBZ polymer having an inherent viscosity of greater than 20g/dl through a spinneret having a first applied voltage; and
collecting the extruded polypyridazole, PBP, or PBZ polymer on a collection surface optionally having a second applied voltage that is opposite in polarity to the first applied voltage.

**8.** The method of claim 7 wherein the solution comprising polypyridazole, PBO, or PBZ polymer comprises polyphosphoric acid as a solvent.

**9.** The method of claim 7 or 8 wherein the first applied voltage is in the range of 1kv to 300kV.

**10.** The method of claim 7, 8 or 9 wherein the second applied voltage is in the range of 0 to 10kV.. _

**11.** The method of claim 7, 8, 9 or 10 wherein the polymer is poly[2,6-diimidazo[4,5-b:4,5-e]-pyridinylene-1,4-(2,5-dihydroxy)phenylene).

12. The method of claim 7, 8, 9, 10 or 11 wherein the method additionally comprises the step of passing the extruded polypyridazole, PBO, or PBZ polymer solution through an air gap.

13. The method of claim 12 wherein the method additionally comprises the step of accelerating the extruded polymer solution in the air gap by providing air flow along the direction between the spinneret and collection surface.

14. The method of claim 13 where the second applied voltage is zero.

## Patentansprüche

1. Polymerfilament mit einem mittleren Durchmesser von 20 bis 800 nm, vorzugsweise im Bereich von 100 bis 500 nm, wobei das Filament Polypyridazol-, Polybenzoxazol-(PBO-) oder Polybenzothiazol-(PBZ-)Polymer mit einer Eigenviskosität von mehr als 20 g/dl, vorzugsweise von mehr als 25 g/dl aufweist.

2. Polymerfilament nach Anspruch 1, wobei das Polypyridazol-Polymer Poly[2,6-diimidazo[4,5-b;4,5-e]-pyridinylen-1,4-(2,5-dihydroxy)phenylen] ist.

3. Garn mit einem Filament nach Anspruch 1, das eine Reißfestigkeit des Filaments von mehr als 10 g/den aufweist.

4. Garn nach Anspruch 3, wobei das Filament Poly[2,6-diimidazo[4,5-b;4,5-e]-pyridinylen-1,4-(2,5-dihydroxy)phenylen] aufweist.

5. Gewebe, das ein Filament nach Anspruch 1 oder 2 aufweist.

6. Kleidungsstück, das Gewebe nach Anspruch 5 aufweist.

7. Verfahren zur Herstellung eines Polypyridazol-, Polybenzoxazol-(PBO-) oder Polybenzothiazol-(PBZ-)Polymerfilaments, wobei das Verfahren aufweist:

   Extrudieren einer Lösung, die Polypyridazol-, PBO- oder PBZ-Polymer mit einer Eigenviskosität von mehr als 20 g/dl aufweist, durch eine Spinndüse mit einer ersten angelegten Spannung; und
   Auffangen des extrudierten Polypyridazol-, PBO- oder PBZ-Polymers auf einer Auffangfläche, an die wahlweise eine zweite Spannung mit zur ersten angelegten Spannung entgegengesetzter Polarität angelegt wird.

8. Verfahren nach Anspruch 7, wobei die Polypyridazol-, PBO- oder PBZ-Polymer enthaltende Lösung Polyphosphorsäure als Lösungsmittel aufweist.

9. Verfahren nach Anspruch 7 oder 8, wobei die erste angelegte Spannung im Bereich von 1 kV bis 300 kV liegt.

10. Verfahren nach Anspruch 7, 8 oder 9, wobei die zweite angelegte Spannung im Bereich von 0 bis 10 kV liegt.

11. Verfahren nach Anspruch 7, 8, 9 oder 10, wobei das Polymer Poly[2,6-diimidazo[4,5-b;4,5-e]-pyridinylen-1,4-(2,5-dihydroxy)phenylen] ist.

12. Verfahren nach Anspruch 7, 8, 9, 10 oder 11, wobei das Verfahren außerdem den Schritt zum Durchgang der extrudierten Polypyridazol-, PBO- oder PBZ-Polymerlösung durch einen Luftspalt aufweist.

13. Verfahren nach Anspruch 12, wobei das Verfahren außerdem den Schritt zum Beschleunigen der extrudierten Polymerlösung in dem Luftspalt aufweist, indem ein Luftstrom entlang der Richtung zwischen der Spinndüse und der Auffangfläche bereitgestellt wird.

14. Verfahren nach Anspruch 13, wobei die zweite angelegte Spannung null ist.

## Revendications

1. Filament de polymère possédant un diamètre moyen de 20 à 800 nm, de préférence dans l’intervalle de 100 à 500

nm, le filament comprenant un polymère de polypyridazole, de polybenzoxazole (PBO) ou de polybenzothiazole (PBZ) possédant une viscosité inhérente de plus de 20 g/dl, de préférence de plus de 25 g/dl.

**2.** Filament de polymère selon la revendication 1, dans lequel le polymère de polypyridazole est un poly[2,6-diimidazo [4,5-b:4,5-e]-pyridinylène-1,4-(2,5-dihydroxy)phénylène].

**3.** Fil comprenant un filament selon la revendication 1 possédant une ténacité de filament de plus de 10 g/denier.

**4.** Fil selon la revendication 3, dans lequel le filament comprend un poly[2,6-diimidazo[4,5-b:4,5-e]-pyridinylène-1,4-(2,5-dihydroxy)phénylène].

**5.** Tissu comprenant un filament selon la revendication 1 ou 2.

**6.** Vêtement comprenant un tissu selon la revendication 5.

**7.** Procédé pour la production d'un filament de polymère de polypyridazole, de polybenzoxazole (PBO) ou de polybenzothiazole (PBZ) comprenant:

l'extrusion d'une solution comprenant un polymère de polypyridazole, de PBO ou de PBZ possédant une viscosité inhérente de plus de 20 g/dl à travers une filière présentant une première tension appliquée; et
la récupération du polymère de polypyridazole, de PBO ou de PBZ extrudé sur une surface de récupération présentant optionnellement une deuxième tension appliquée qui est opposée en polarité à la première tension appliquée.

**8.** Procédé selon la revendication 7, dans lequel la solution comprenant un polymère de polypyridazole, de PBO ou de PBZ comprend un acide polyphosphorique comme solvant.

**9.** Procédé selon la revendication 7 ou 8, dans lequel la première tension appliquée est dans l'intervalle de 1kV à 300 kV.

**10.** Procédé selon la revendication 7, 8 ou 9, dans lequel la deuxième tension appliquée est dans l'intervalle de 0 à 10 kV.

**11.** Procédé selon la revendication 7, 8, 9 ou 10, dans lequel le polymère est un poly[2,6-diimidazo[4,5-b:4,5-e]-pyridinylène-1,4-(2,5-dihydroxy)phénylène].

**12.** Procédé selon la revendication 7, 8, 9, 10 ou 11, où le procédé comprend en outre l'étape de passage de la solution de polymère de polypyridazole, de PBO ou de PBZ extrudé à travers un espace d'air.

**13.** Procédé selon la revendication 12, où le procédé comprend en outre l'étape d'accélération de la solution de polymère extrudé dans l'espace d'air en fournissant une circulation d'air le long de la direction entre la filière et la surface de récupération.

**14.** Procédé selon la revendication 13, dans lequel la deuxième tension appliquée est zéro.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4263245 A
- US 6315806 B
- US 20050026526 A
- WO 03080905 PCT
- WO 05026398 PCT
- US 20050048274 A
- WO 9320400 A
- US 2895948 A
- US REISSUE26065 A
- US 3441640 A
- US 5674969 A, Sikkema
- WO 03080905 A


### Non-patent literature cited in the description


- **Brew et al.** *Composites Science and Technology,* 1999, vol. 59, 1109
- **Van der Jagt ; Beukers.** *Polymer,* 1999, vol. 40, 1035
- **Sikkema.** *Polymer,* 1998, vol. 39, 5981
- **Klop ; Lammers.** *Polymer,* 1998, vol. 39, 5987
- **Hageman et al.** *Polymer,* 1999, vol. 40, 1313